# EUROPEAN PATENT SPECIFICATION

(11) **EP 1 591 973 B1**
(45) Date of publication and mention of the grant of the patent: **07.01.2009**
(21) Application number: 05009249.3
(22) Date of filing: 27.04.2005
(51) Int. Cl.: G07F 17/32

(54) **Gaming machine**
Spielautomat
Machine à sous

(30) Priority: 30.04.2004 JP 2004135366
(43) Date of publication of application: 02.11.2005
(73) Proprietor: Aruze Corp., Tokyo 135-0063 (JP)
(72) Inventor: Takeda, Kengo, Tokyo 135-0063 (JP)
(74) Representative: Grünecker, Kinkeldey, Stockmair & Schwanhäusser Anwaltssozietät

(56) References cited:
- WO-A-00/16863
- US-A1- 2002 160 839
- PATENT ABSTRACTS OF JAPAN vol. 2003, no. 12, 5 December 2003 (2003-12-05) & JP 2003 276399 A (MATSUSHITA ELECTRIC IND CO LTD), 30 September 2003 (2003-09-30)

## Description

### BACKGROUND OF THE INVENTION

### FIELD OF THE INVENTION:

The present invention mainly relates to a gaming machine, and more particularly, to a gaming machine which obtains a position indicated by a player using light beams having predetermined spectrum components as an image and specifies the position indicated by the player by analyzing the image.

### 2. RELATED ART:

With respect to a gaming machine which is installed in a game arcade or a gaming arena, recently, there has been observed a gaming machine which proposes a game such as roulette, poker, bridge or baccarat in which a player indicates a certain position on a game table and bets an arbitrary number of chips on the place indicated by the player. For example, there has been proposed a gaming device in which a game screen is displayed on a large-sized display panel which functions as a game table and a large-sized panel display is made use of as a game table such as a roulette table or a poker table.

In such a gaming machine, the operation in which the player indicates the desired position on the large-sized panel display with his/her hand or the like is referred to an input manipulation. Upon receiving such an input manipulation by indication, the gaming machine detects the indicated position and advances the game in response to the input indication from the player.

As a technique which detects the positions indicated by the player, there has been disclosed a technique which detects player's hands on the game table by irradiating infrared rays and measuring a reflection time of the infrared rays on a player's hand after being reflected from the player's hand or the intensity of the received light.

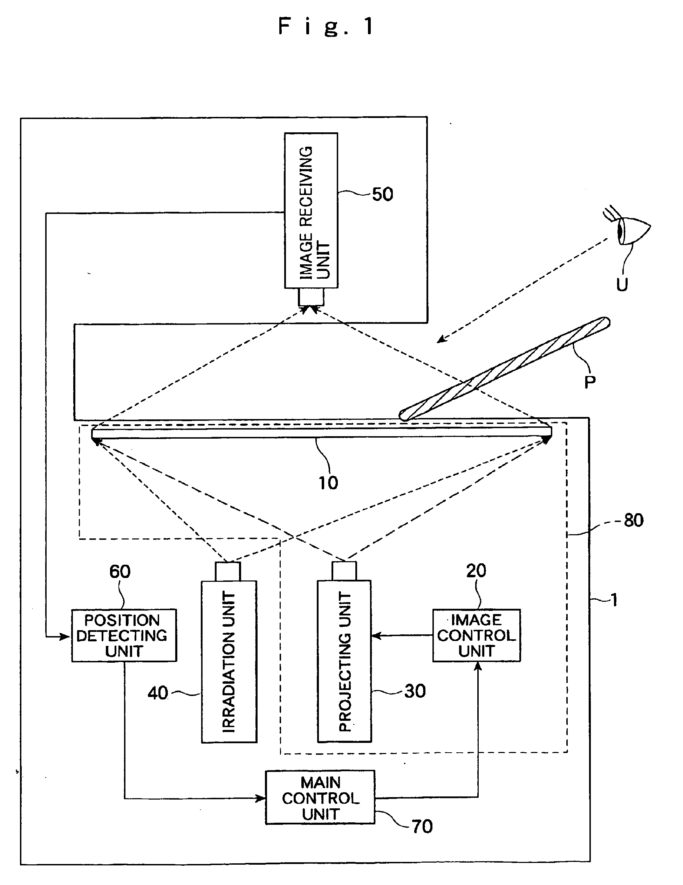

Further, as another technique which detects the positions indicated by the player, there has been disclosed a technique which photographs a game table or a player' s hand on a game table under a visible light and analyzes an image obtained by such photographing thus detecting the position of the hand (for example, Japanese Patent Laid-open 2001-273092 (Fig. 1, paragraphs [0028] to [0033])).

JP-A-2002 082649 concerns a position detecting method and device and electronic blackboard device to precisely detect a position of an electronic pen on an electronic blackboard. The electronic blackboard device comprises a screen with high transmission properties. An electronic pen emits the light of a specified wavelength while traveling on the screen and an infrared camera receives the light transmitted to the backside of the screen and detects the position of the electronic pen.

WO-A-00/16863 concerns a casino game table and method for interactive live table game play. It includes a computer-controlled display forming an upper member of the table to display gaming images. The game table may include a dealer position and the number of player positions at which are displayed representations of game cards and other game images during game play. A computer controlled graphic display system displays game images in association with touch sensitive regions as inputs to the computer controlling the display that is viewable on the playing surface of the table.

### Summary of the Invention

In the detecting method which makes use of the reflection of the irradiated infrared rays from the player's hand which constitutes the method of detecting the position indicated by the player, depending on a portion of the hand on which the infrared rays impinge, a reflection amount and a reflection angle of the infrared rays which return after being reflected on the hand are changed thus giving rise to a drawback that it is difficult to obtain the accurate positional information. Further, in the method which obtains the positional information by performing the image processing of the image of the photographed game table under the visible light, due to the reflection of the periphery of the game table and light beams from other light sources around the gaming machine (illumination or a display of other gaming machine in the inside of the gaming center), there exists the possibility that undesired elements are included in the image of the game table and hence, there exists the possibility that it is difficult to obtain the accurate positional information due to these disturbance factors.

Accordingly, it is an object of the present invention to provide a technique which is capable of obtainingmore accurate information compared to a related art by obtaining a position indicated by a player as an image using light beams having given spectrum components such as infrared rays and by analyzing such an image.

The present invention has the following constitutional features as means to overcome the above-mentioned drawbacks.

The present invention proposes a gaming machine which specifies a position indicated by an indicator with which a player indicates a desired position, and performs a control based on the position. This gaming machine includes a focusing means (a transmissive screen) which has a first surface and a second surface which faces the first surface in an opposed manner and allows the player to indicate the given position with the indicator, an irradiation means (an infrared ray lamp) which irradiates light beams having spectrum components and capable of passing through the focusing means from the first-surface side of the focusing means but incapable of passing through the indicator, an image receiving means (a camera provided with an infrared filter) which receives the spectrum components on the second-surface side of the focusing means and generates image data based on the spectrum components, a position detecting means (position detecting part) which specifies the position indicated by the indicator by processing the image data generated by the image receiving means, and a main control means (game control part) which performs a control of the gaming machine based on the position specified by the position detecting means.

In this gaming machine, the irradiation means and the image receivingmeans are arranged in a state that the irradiation means and the light receiving means sandwich the focusing means therebetween. That is, for example, when the irradiation means is arranged on a side of an upper surface which constitutes the first surface of the focusing means, the image receiving means is arranged on a side of a lower surface which constitutes a second surface of the focusing means. On the other hand, when the irradiation means is arranged on a side of a lower surface of the focusing means, the image receiving means is arranged on an upper-surface side of the focusing means. Here, it is not always necessary that the focusing means is arranged in a state that the focusing means spreads horizontally or substantially horizontally, and the image focusing means may be arranged in a state that the focusing means spreads vertically or substantially vertically, as a matter of course.

The irradiation means irradiates the light beams having the spectrum components which pass through the focusing means but does not pass through the indicator. The irradiation means may be configured to irradiate only the spectrum components or to irradiate light containing components other than the spectrum components. As the spectrum components, spectrum components corresponding to the infrared rays, for example, are considered.

The image receiving means receives only the spectrum components as the image. Since other components such as visual-light components are not received as an image, in the processing to detect the position indicated by the indicator, it is possible to reduce a load incurred by performing the subtracting processing of the visual-light components.

According to the present invention, compared to a technique which determines a position by irradiating infrared rays to a target object and by detecting the infrared rays reflected from the target object, it is possible to obtain the accurate positional information without being influenced by the change of reflection amount or the reflection direction of the infrared rays.

### BRIEF DESCRIPTION OF THE DRAWINGS

Fig. 1 is a block diagram showing a basic constitutional example of a gaming machine;
Fig. 2 is a block diagram showing a modification of the gaming machine shown in Fig. 1;
Fig. 3 is a block diagram showing another modification of the gaming machine shown in Fig. 1;
Fig. 4 is an appearance perspective view of the gaming machine;
Fig. 5 is a view showing an arrangement example of an optical system which is stored in the inside of a table portion or the like;
Fig. 6 is a block diagram showing an electric constitutional example of the gaming machine;
Fig. 7 is a view showing an example of a screen displayed on a front display of the gaming machine;
Fig. 8 is a view showing a screen example displayed on a table screen of the gaming machine;
Fig. 9 is a flow chart showing an example of position detecting processing which performs the detection of position of an indicator using spectrum component image data;
Fig. 10A is a view showing a state in which a player on a table screen indicates a bet position with the indicator;
Fig. 10B is a view showing an example of an image obtained by a camera provided with an infrared ray in a state shown in Fig. 10A; and
Fig. 11 is a block diagram showing a modification of the gaming machine.

### DESCRIPTION OF THE PREFERRED EMBODIMENTS

### [First embodiment]

Hereinafter, the first embodiment of the present invention according to the present invention is explained in conjunction with drawings. Fig. 1 is a block diagram showing a basic constitutional example of a gaming machine according to the first embodiment of the present invention.

The gaming machine 1 includes a focusing unit 10 which displays an image corresponding to a game table and functions as a game table; an image control unit 20 which supplies image data for allowing the focusing unit 10 to depict the game table or the like to the focusing unit 10; a projecting unit 30 which projects an image for allowing the focusing unit 10 to display the game table or the like from below the focusing unit 10 based on the image data from the image control unit 20; an irradiation unit 40 which irradiates light beams capable of passing through the focusing unit 10 but incapable of passing through the indicator P (or light beams exhibiting the higher transmissivity with respect to the focusing unit 10 than with respect to the indicator P) and containing spectrum components (hereinafter referred to as "irradiation light") toward the focusing unit 10 from the lower side of the focusing unit 10; an image receiving unit 50 which receives the irradiation light passing through the focusing unit 10 and photographs the focusing unit 10 and the indicator P from an upper surface side of the focusing unit 10 based on the irradiation light; a position detecting unit 60 which receives image data outputted from the image receiving means 50 and obtained by photographing from the upper side of the focusing unit 10, determines the position indicated by the indicator P based on the image data and outputs the positional information indicating the position; and a main control unit 70 which performs a control of the operation of the whole gaming machine 1 such as instructing the image to be formedon the focusing unit 10 to the image control unit 20 based on the positional information specified by the position detecting unit 60. Further, the focusing unit 10, the image control unit 20 and the projecting unit 30 are cooperatively operated thus functioning as an image display unit 80 which displays the image corresponding to the game table to the player dynamically.

The focusing unit 10 has the transmissivity with respect to the irradiation light and allows given spectrum components in the irradiation light which is directed at least from the lower surface to the upper surface to pass therethrough. The focusing unit 10 is, for example, a transmissive screen for a liquid crystal projector. The transmissive screen which constitutes the focusing unit 10 has a light diffusion layer and includes a screen onwhich a light contrast image is projected by efficiently scattering the light from the liquid crystal projector or the like.

When a user U observes a focusing unit 10 from the front surface of the focusing unit 10, an optical image which is irradiated from the back surface side of the focusing unit 10 by the projecting unit 30 is focused on the focusing unit 10. As a result, the user U can observe an image corresponding to the image data which the projecting unit 30 irradiates.

The indicator P is an object or a means which the user uses for indicating a desired position of the image displayed on the focusing unit 10 and is, for example, a hand (including an arm portion) of the user U himself/herself, an indicating rod or the like, for example. While the focusing unit 10 has the transmissivity with respect to the irradiation light, the indicator P does not have the transmissivity with respect to the irradiation light and hence, with respect to the images which are obtained by the image receiving unit 50, for example, the indicator P forms the black image and the other region of the focusing unit 10 forms the white image.

The projecting unit 30 is an optical projecting system which is capable of projecting an optical image to the focusing unit 10 based on the image data and is a liquid crystal projector (DLP (Digital Liquid Projector)), for example.

The irradiation unit 40 has a function of irradiating the irradiation light containing given spectrum components, wherein when the given spectrum components are infrared rays, the irradiation unit 40 is an infrared lamp or the like.

The image receiving unit 50 is a unit which receives the given spectrum components contained in the irradiation light and produces image data which is obtained by photographing from the upper surface side of the focusing unit 10. The image receiving unit 50 is, for example, a digital camera, a digital video camera, a CCD camera unit provided with an infrared ray, for example.

The image control unit 20, the position detecting unit 60, the main control unit 70 are respectively constituted of a device which includes an arithmetic processing device (CPU) , a main memory (RAM) , a read only memory (ROM) , an input/output device (I/O), and an external storage device such as a hard disc device or the like when necessary. That is, these units may be formed of an information processing unit such as a computer, a workstation, an LSI chip or the like. In the above-mentioned ROM or the hard disc device, a program which allows the information processing device to function as the image control unit 20, the position detecting part 60 or the main control unit 70 is stored. By storing this program in the main memory and by allowing the CPU which constitutes an information processing device to execute this program, the image control unit 20, the position detecting part 60 or the main control unit 70 can be realized. Further, the above-mentioned program is not always necessary to be stored in the storage device in the inside of the information processing device and may be provided from an external device (for example, anASP (a server of an application service provider) or the like) and may be stored in the main memory.

The image control unit 20, the position detecting unit 60 and the main control unit 70 may be respectively realized by individual information processing device or one information processing device may be configured to function as the image control unit 20, the position detecting unit 60 and the main control unit 70.

The image control unit 20 stores image data on the game table or items (for example, chips or coins for games) affiliated with the game table to be displayed to the user, wherein the necessary image data is read out in response to a command from the main control unit 70 and is subjected to the image processing when necessary, and is provided to the projecting unit 30.

The position detecting unit 60 receives the image data obtained by photographing from the upper surface side of the focusing unit 10 from the image receiving unit 50, and performs the necessary image processing (image analysis) on the image data thus detecting the position indicated by the indicator P (for example, the coordinates value of the distal end of the indicator P) and outputting the detected position as the positional information. As the image processing, the threshold value processing for performing the region extracting of the shade region which the indicator P which is non-transmissive with respect to the given spectrum components or the edge detection for extracting a profile of the shade region is considered. The position detecting unit 60 generates the positional information of the shade PS by making use of the coordinates positional information of pixels of a region or a profile line obtained by these threshold value processing or the edge detection.

The main control unit 70 has a function of controlling the operation of the whole gaming machine 1, wherein the main control unit 70 instructs the image data to be outputted and the timing at which the image data is outputted or the like to the image control unit 20and, at the same time, instructs the image control unit 20 to change the image data in response to the positional information of the position indicated by the indicator P from the position detecting unit 60.

According to the gamingmachine 1 of the present invention, it is possible to provide the image di splay and position detection technique which is capable of changing the image displayed on the focusing unit 10 in accordance with the position which the user indicates with the indicator P. That is, the gaming machine 1 of the present invention can effectively utilize the focusing unit 10 as the image display unit and, at the same time, as the information input device for allowing the user to input the positional information.

### [Modification of the first embodiment]

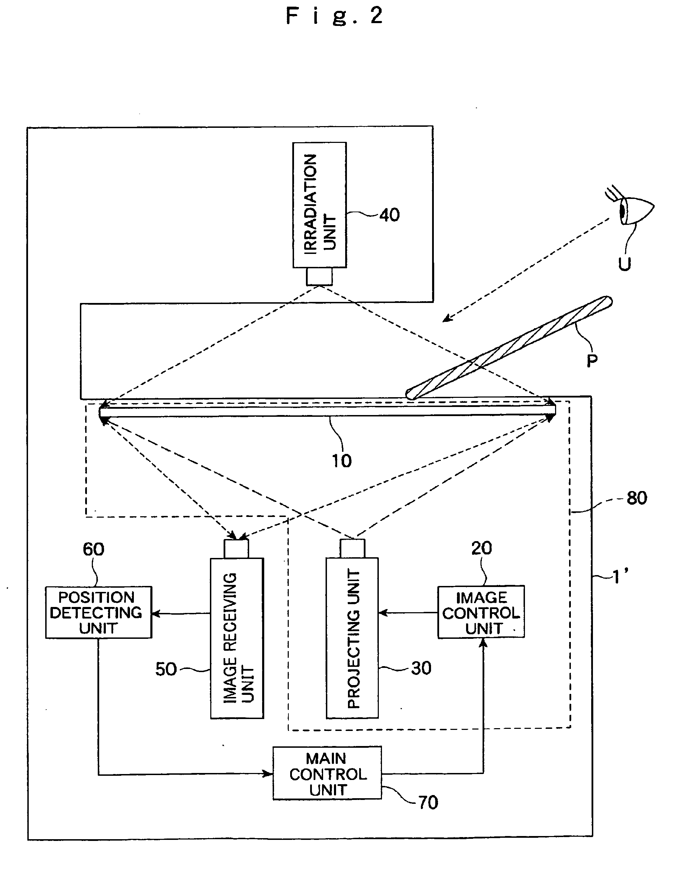

Fig. 2 shows a modification of the gaming machine 1 shown in Fig. 1. In the constitution of the gaming machine 1 shown in Fig. 1, the irradiation unit 40 is provided to the lower-surface side of the focusing unit 10 and the image receiving unit 50 is provided to the upper-surface side of the focusing unit 10, wherein the detection of the position is performed using the image containing the indicator P based on the given spectrum components. On the other hand, in the gaming machine 1' according to the modification of the embodiment shown in Fig. 2, the positions of the irradiation unit 40 and the image receiving unit 50 are exchanged. That is, the irradiation unit 40 is provided to the upper-surface side of the focusing unit 10 and the image receiving unit 50 is provided on the lower-surface side of the focusing unit 10, wherein the detection of the position is performed using the image containing the indicator P based on the given spectrum components. Also with such a constitution, it is possible to realize the gaming machine equivalent to the gaming machine 1 shown in Fig. 1.

### [Another modification of the first embodiment]

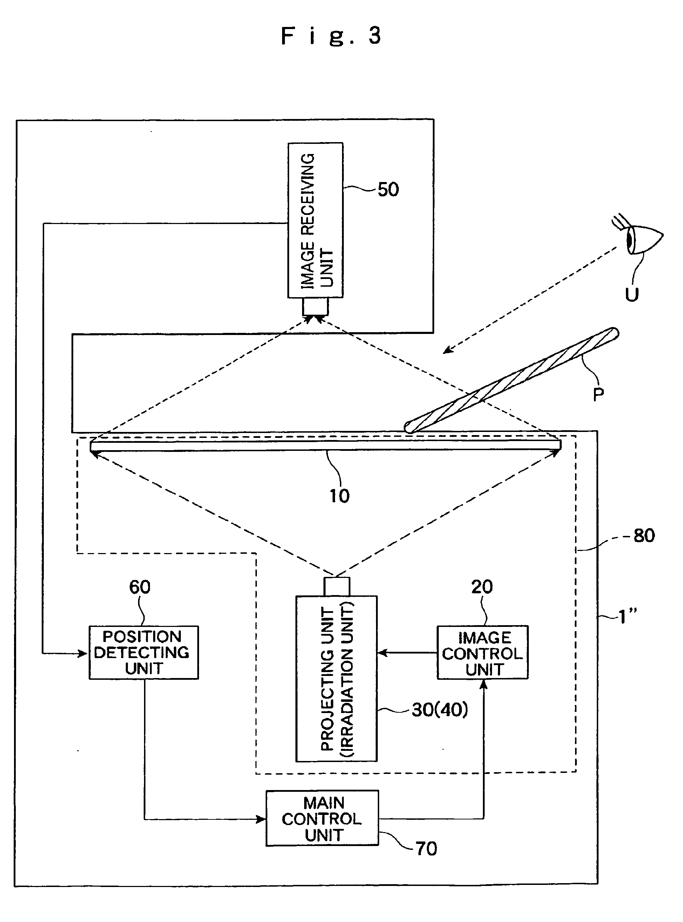

Fig. 3 shows another modification of the gaming machine 1 shown in Fig. 1. In the constitution of the gaming machine 1 shown in Fig. 1, the irradiation unit 40 is provided separately from the projecting unit 30. However, according to a gaming machine 1" of this modification, the projecting unit 30 also functions as the irradiation unit 40. That is, in this modification, the above-mentioned given spectrum components are contained in the light which forms the image projected by the projecting unit 30 and the light which is irradiated from the projecting unit 30 to form the image is utilized as the irradiation light. According to such a constitution, it is possible to simplify the structure in the inside of the gaming machine 1" .

Here, also in the modification shown in Fig. 3, it is possible to provide the modification in which the projecting unit 30 also functions as the irradiation unit 40.

### [Example]

Next, the examples according to the present invention are explained.

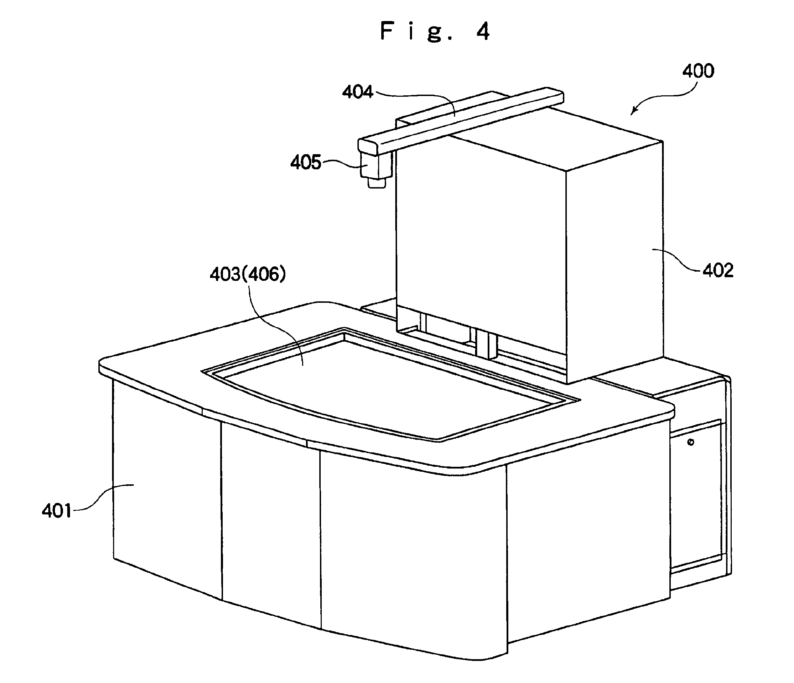

Fig. 4 is a perspective view of an appearance of a gaming machine 400 according to an example of the present invention. Here, although the gaming machine 400 is explained as a device which allows users to play a baccarat game, the application of the gaming machine 400 according to this example is not limited to the baccarat game. That is, the gaming machine 400 according to this example is applicable to any game such as poker, black jack, bridge or roulette or the like.

The gaming machine 400 according to this example includes a table part 401 and a front display 402 which is mounted on a rear portion of the table part 401.

A table part 401 houses an optical system and information processing equipment which constitute the gaming machine 400 therein. An opening is formed in a center portion of an upper surface of the table part 401 and a transmissive screen 403 which constitutes the focusing unit 10 is extended over the opening. The transmissive screen 403 functions as an upper surface display (hereinafter referred to as "table screen 406") which displays the game table to the players. Here, a surface of the transmissive screen 403 is protected by a transparent plate member such as a glass panel thus preventing the transmissive screen 403 from being broken or smeared even when the player touches the table screen 406 with his/her hand or the like which constitutes the indicator P.

On an upper portion of the front display 402, a camera 405 provided with an infrared ray filter which constitutes the image receiving unit 50 is mounted using an arm 404.

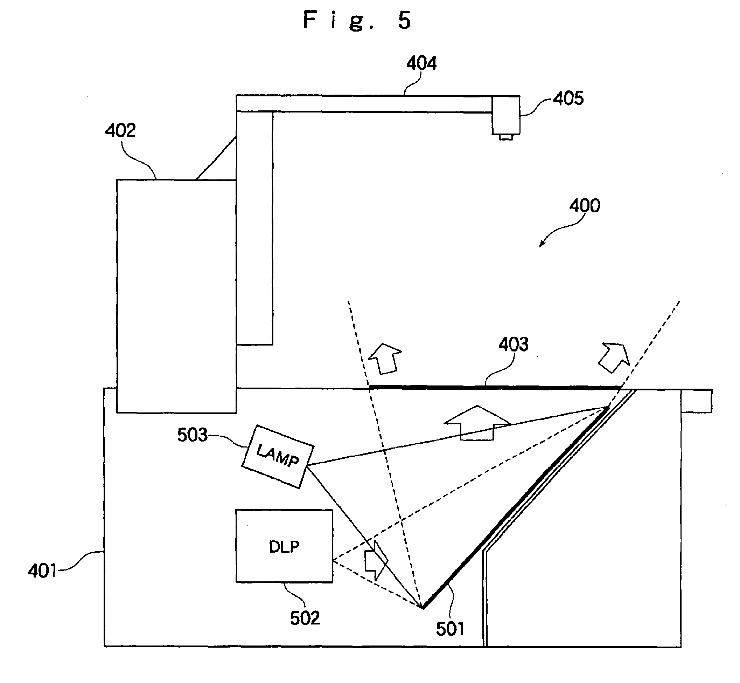

Fig. 5 is a view showing an arrangement example of the optical system housed in the inside of the table part 401 or the like.

To a center portion of the table part 401, the transmissive screen 403 is fixed in a state that the transmissive screen 403 is protected by a glass plate or the like. A mirror 501 is arranged in an inclined state below the transmissive screen 403. At a position which faces the mirror 501, a digital liquid crystal projector .(hereinafter referred to as "DLP") 502 which corresponds to the projecting unit 30 and an infrared ray lamp 503 which corresponds to the irradiation unit 40 are fixed. The mirror 501 reflects the image radiated from the DLP 502 toward the transmissive screen 403 and a distance between the mirror 501 and the DLP 502 and an angle of a reflection surface are adjusted so as to project the image with a desired size. In the same manner, the mirror 501 is arranged in a state that a distance between the mirror 501 and the infrared ray lamp 503 and an angle of the reflection surface with respect to the infrared ray lamp 503 can be adjusted to allow the infrared rays which constitute the irradiation light which is irradiated from the infrared ray lam p 603 to reach the camera 405 through the transmissive screen 403. Here, it may be possible to adopt the constitution in which the infrared ray lamp 503 is arranged at a position where the irradiation light which the infrared lamp 503 irradiates is not reflected on the mirror 501 and is directly irradiated to the transmissive screen 403.

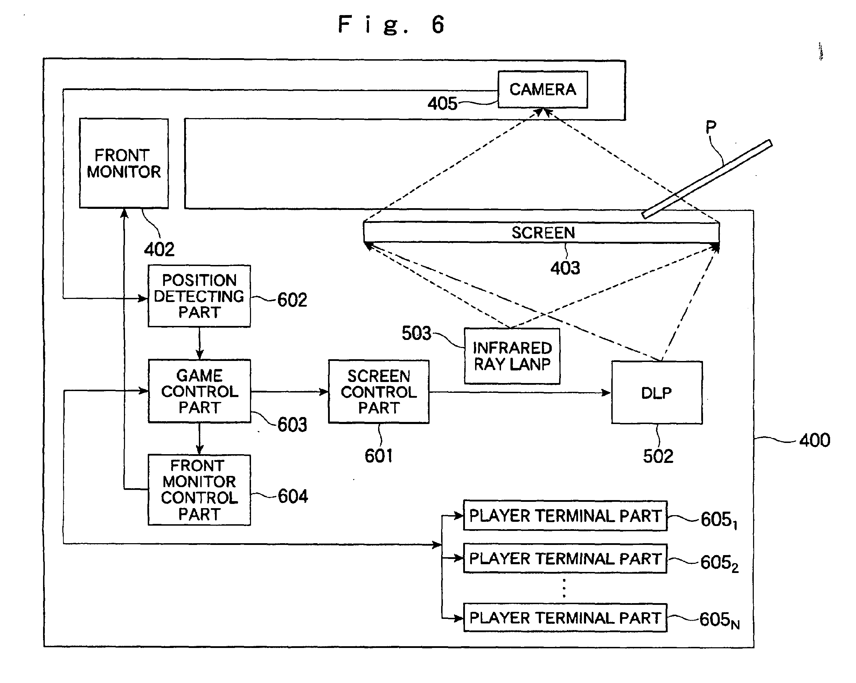

Next, an electrical constitutional example of the gaming machine 400 is explained. Fig. 6 is a block diagram showing the electrical constitutional example of the gaming machine 400.

As shown in Fig. 6, the gaming machine 400 includes the transmissive screen 403. A camera 405 provided with an infrared ray filter is mounted on an upper-surface side of the transmissive screen 403, while an infrared lamp 503 is mounted on a lower-surface side of the transmissive screen 403. Further, on the lower-surface side of the transmissive screen 403, a DLP 502 which constitutes the projecting unit 30 is also mounted, wherein the DLP 502 optically projects an image for optically displaying the game table on the transmissive screen 403. A screen control part 601 supplies the image data to the DLP 502.

The camera 405 provided with an infrared ray filter and constitutes the image receiving unit 50 receives the infrared ray components which constitute the given spectrum components out of the irradiation light which is irradiated from the infrared ray lamp 503 and outputs the image data obtained by photographing the upper surface of the transmissive screen 403 (hereinafter referred to as "spectrum component image data") . Here, although the infrared ray components which constitute the given spectrum components are capable of passing through the transmissive screen 403, the infrared ray components are incapable of passing through the indicator P. Accordingly, the image which is obtained by photographing the upper surface of the transmissive screen 403 constitutes an image in which the indicator P is displayed as a shade and other portions are displayed as a white region.

The position detecting part 602 which constitutes the position detecting unit 60 can detect the position indicated by the indicator P by processing and analyzing the image data of the spectrum components and can output the positional information which indicates the indicated position. The game control part 603 which constitutes the main control unit 70 has a function of controlling the operation of the gaming machine 500. The game control part 603 instructs which display data is to be outputted to the screen control part 601 and at which timing the image data is to be outputted. At the same time, the game control part 603 receives the positional information from the position detectingpart 602. The operation of the gaming machine 400 is controlled based on this positional information.

The front display control part 604 outputs the image data of the image to be displayed on the front display 402 (hereinafter referred to as "front image data") in response to the instruction from the game control part 603. The front display 402 receives and displays the front image data. The image displayed on the front display 402 informs, in cooperation with the image displayed on the transmissive screen 503, the situation, the progress and the like of the game to the users.

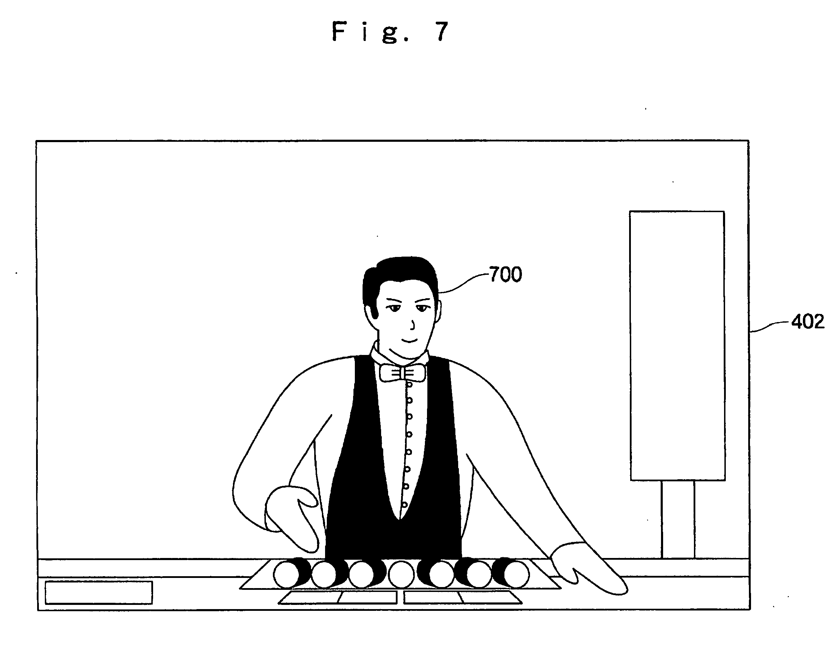

In this example, a dealer of a baccarat is displayed as a moving image on the front display 402 based on the front surface image data. Fig. 7 is a screen example displayed on the front display 402. On the screen, the dealer 700 is displayed. That is, the mode in which the dealer distributes cards, draws cards and delivers chips in accordance with the progress of the game is displayed and hence, it is possible to obtain an effect as if the player is actually playing the baccarat with an actual dealer.

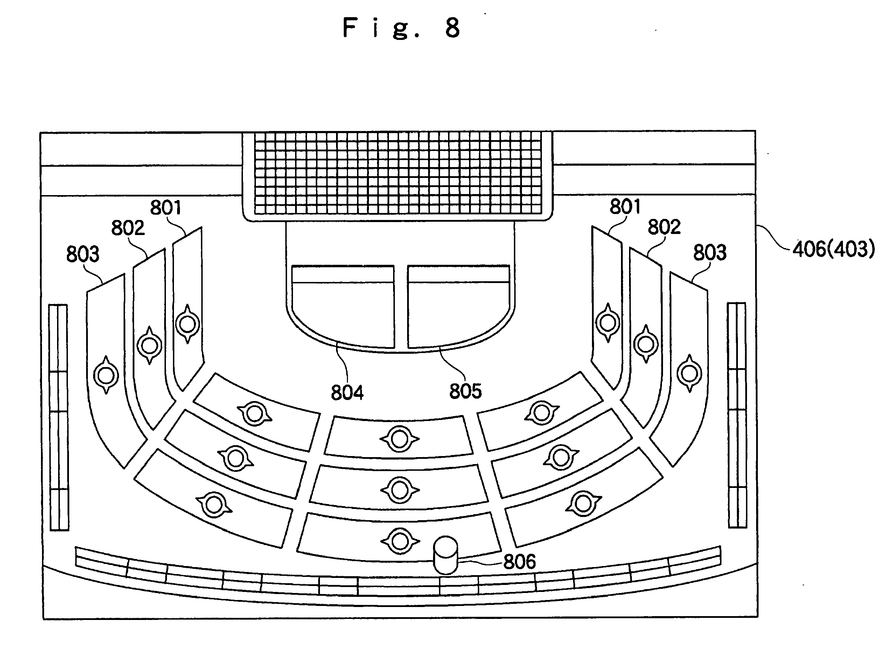

Next, a screen example displayed on the table screen 406 (transmissive screen 403) is explained. Fig. 8 is a screen example displayed on the table screen 406 of the gaming machine 400 (transmissive screen 403) . In this example, a screen which imitates a baccarat table is displayed on the table screen 406. On the baccarat table illustrated in the example, regions 801, 802, 803 for betting to "TIE", "BANKER", "PLAYER", are displayed for five respective players. By allowing the player to indicate any one of the regions 801, 802, 803 using his/her hand or the like which constitutes the indicator P, the information on which one of the "TIE", "BANKER", "PLAYER" the player bets is inputted to the gaming machine 400. Here, the number of chips, an amount of money and the number of credits for betting can be decided by the player using a betting button of a player terminal part 605₁ to 605_{N} described later. A pile of chips 806 which each player possesses can be also displayed on the table screen 406. When the player instructs his/her betting to any one of the "TIE", "BANKER", "PLAYER", using the indicator P, the image is changed to allow the table screen 406 to perform the display in which the number of chips which are bet are moved to any one of the regions 801, 802, 803 which are designated by the indicator P from a pile of chips 806 in front of the player.

Further, the table screen 406 includes regions 804, 805 where the dealer 700 distributes cards of BANKER and PLAYER and images of cards which are equal to the distributed cards are displayed on these regions 804, 805.

Returning back to Fig. 6, the electrical constitutional example of the gaming machine 400 is further explained.

To the game control part 603, a plurality of player terminal parts 605₁ to 605_{N} which are provided to respective players are connected. Each player terminal part 605 which constitutes a player terminal unit is a terminal which receives coins, bills, prepaid cards, credit cards or the like and changes them to credits (medals/coins) which can be used in the gaming machine 400. The player terminal part 605 also has a bill validation function of paying out the credits (medals/coins) which the player terminal part 405 possesses in response to the payout indication from the player at a point of time that the payout indication is made and a bet inputting function for determining the number of bets, an amount of money and the number of credits in the game. The player inputs the indication necessary for advancing the game using this player terminal part 605 and the indicator P.

Next, the processing of detecting positions which are indicated by a hand as the indicator P based on the spectrum component image data obtained by a camera 405 provided with an infrared ray filter as an image receiving unit 50 is explained.

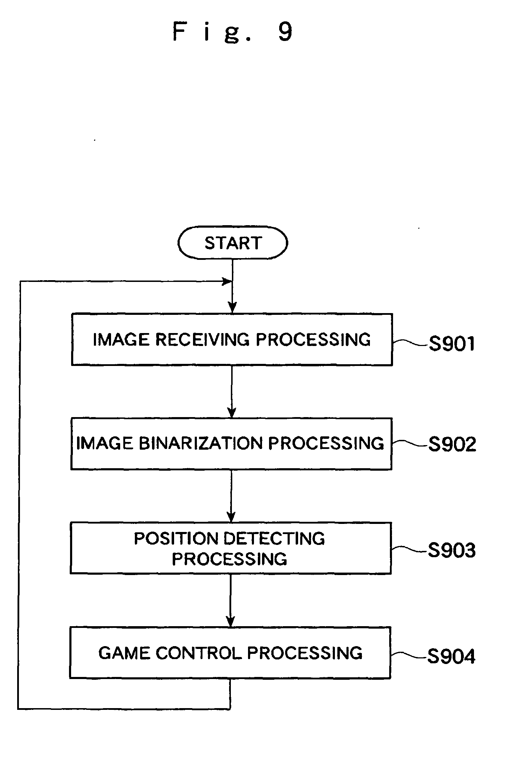

Fig. 9 is a flow chart which indicates an example of the position detecting processing of the indicator P which is performed by using spectrum component image data.

Firstly, the gaming machine 400 performs image receiving processing using the camera 405 provided with an infrared ray filter (Step S901). That is to say, the camera 405 provided with an infrared ray filter receives the irradiation light which the infrared ray lamp 503 irradiates by way of the screen 403.

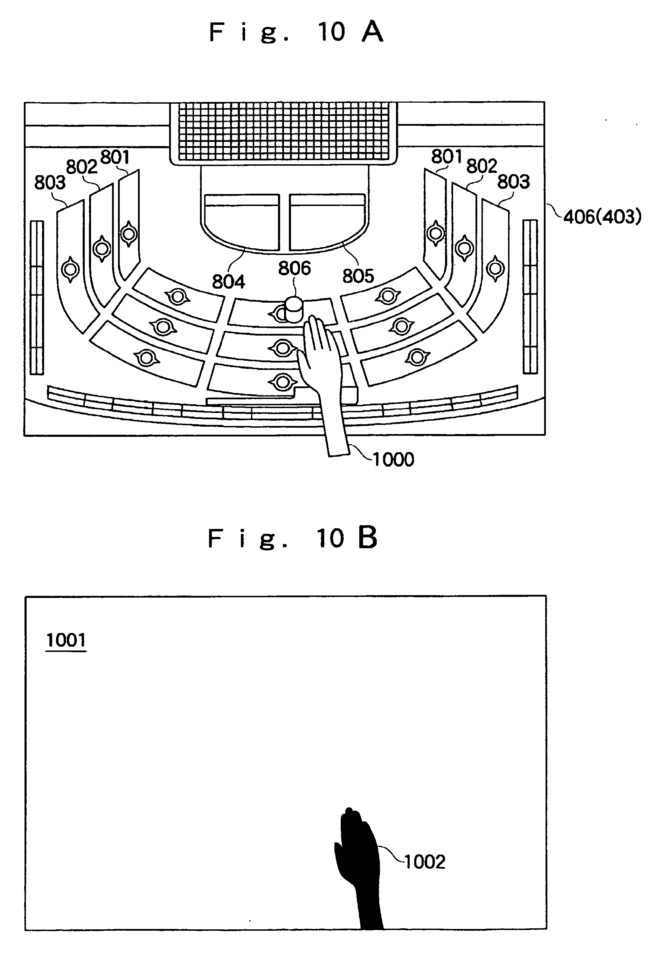

Fig. 10A shows a state in which a player extends his/her own hand 1000 which constitutes the indicator P over the table screen 406 and indicates a betting position. Here, the infrared ray lamp 503 which constitutes the irradiation unit 40 irradiates the infrared ray light which is formed of given spectrum components of the irradiation light to the upper-surface side of the screen 403 from the lower-surface side of the screen 403.

Fig. 10B shows an example of an image obtained by the camera 405 provided with an infrared ray filter in the state shown in Fig. 10A. A region 1001 which corresponds to the screen 403 is a region through which the given spectrum components pass and hence, the region 1001 is received by the camera 405 provided with an infrared ray filter as a white region. On the other hand, a hand 1000 which constitutes the indicator P constitutes a region which prevents the given spectrum components from passing therethrough and hence, the hand 1000 is received by the camera 405 provided with an infrared ray filter filer as a shade region 1002.

The camera 4 05 provided with an infrared ray filter outputs the spectrum-component image data which constitutes the image shown in Fig. 10B and finishes the image receiving processing.

Returning to Fig. 9, the flow chart is further explained.

Position detecting part 602, upon receiving the spectrum-component image data, performs the binarization processing of the spectrum-component image data (Step S902) . The thin portion such as the penumbra is subtracted from the shade 1002 of the indicator P by the binarization processing and the distal end portion of the indicator P is left and hence, it becomes clear which position the indicator P is indicating. In performing the binarization processing, a proper threshold value is set to enable the specifying of the distal end portion of the indicator P. Since the proper value of the threshold value to be predetermined is changed depending on the environment around the gaming machine 400 (spectrum component included in the light beamed by the peripheral illumination) , a running test may be performed after installing the gaming machine 400 so as to find out the proper threshold value.

Next, the position detecting part 602 performs the position detecting processing based on the back surface image data after the binarization processing (Step S903). The position detecting part 602 obtains the coordinates value (x, y values) of pixels which have black values based on the spectrum component image data after the binarization processing and generates the positional information based on the obtained coordinate values. The positional information may be the coordinate value of the pixel which constitutes a peak of the distal end portion. Alternatively, an average value or a center value of the coordinate values of all pixels which possess black values may be selected. After position detecting processing is finished, the position detecting part 602 outputs the positional information generated at Step S903 to the game control part 603.

The game control part 603 performs predetermined processing based on positional information which the game control part 603 receives from the position detecting part 602 such as image display processing, the bet determining processing or the like (step S904) . For example, in performing the control, the game control part 603 determines the positional information as the designationof anyoneof the regions 801, 802, 803 for betting to "TIE", "BANKER", "PLAYER", and displays an image of a pile of chips 806 in the inside of the designated region.

As described above, it is possible to realize the gaming machine 400 which uses the transmissive screen 403 constituted of the focusing unit 10.

### (Modification)

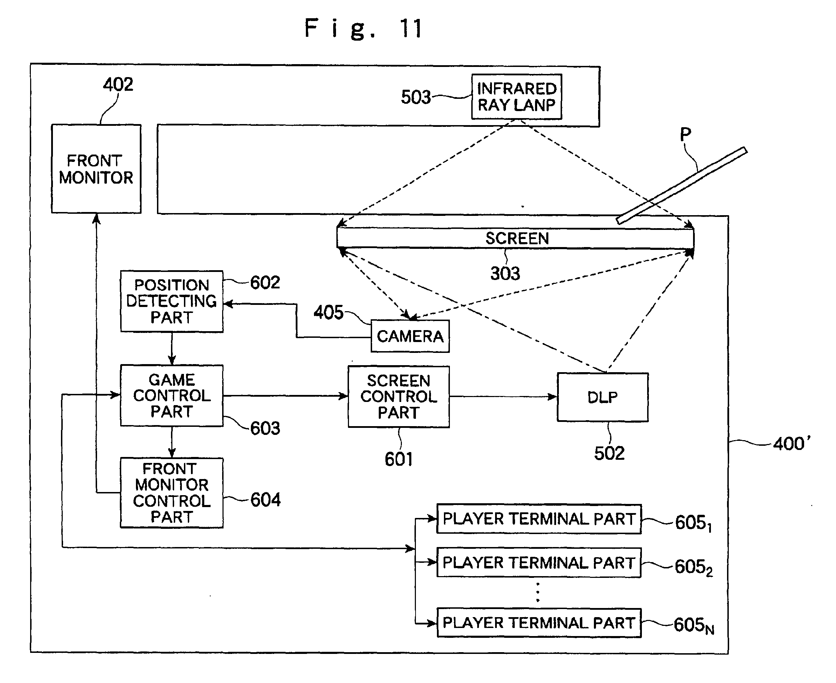

(1) Fig. 11 shows the modification of the gaming machine 400. In the gaming machine 400 which relates to the above-mentioned example, the infrared ray lamp 503 is provided on a lower-surface side of the screen 303, the camera 405 provided with an infrared ray filter is provided on an upper-surface side of the transmissive screen 403, and the detection of the position is performed using the image containing the indicator P having the given spectrum components. In a gaming machine 400' according to the modification shown in Fig. 11, however, the positions of the infrared ray lamp 503 and the camera 405 provided with infrared ray filter are exchanged. That is, the infrared ray lamp 503 is mounted on the upper-surface side of the screen 303, while the camera 405 provided with an infrared ray filter is mounted on a lower-surface side of the transmissive screen 403, and the detection of the position is performed using the image containing the indicator P based on the given spectrum components. This example is substantially equal to the gaming machine 400 shown in Fig. 6 with respect to other constitutional elements and the manner of operation.
(2) In the above-mentioned example, with respect to the gaming machine 400 shown in Fig. 6, although the infrared ray lamp 503 is separately provided from the DLP 502, there may be a case in which the infrared ray lamp 503 is not provided and the DLP 502 is, in place of the infrared ray lamp 503, allowed to perform the irradiation of the light containing given spectrum components. That is, in this modification, it may be possible to provide the constitution in which the light which the DLP 502 irradiates for forming the image may contain the above-mentioned given spectrum components and the image which the DLP 502 irradiates is used as the irradiation light.

Still further, to recapitulate other constitutional features of the present invention, the gaming machine further includes the projecting means for projecting an image of the focusing means for displaying the image of the game table on the focusing means, wherein projecting means constitutes the irradiation means.

According to the present invention, by obtaining the position indicated by the indicator as the image and by analyzing the image, it is possible to accurately identify the position indicated by the indicator without receiving the influence of a disturbance light attributed to the external illumination or the like.

Further, according to the present invention, since the part which becomes the reference for determining the positional information or the like (the frame showing a bet area or the like) is displayed and hence, the player himself/herself can indicate the position.

The present invention is not limited to the gaming machine and is applicable to all devices and systems which perform the reception of inputting of the users by making use of the image display and the displayed image. That is, the present invention is also applicable to the information inputting machine for presentation, the demonstration device for promoting sales and the like.

## Claims

1. A gaming machine comprising:
a projecting means (30, 502) which projects an image of a game table;
a focusing means (10, 403) which focuses and displays the image projected by the projecting means (30, 502);
an irradiation means (40, 503) which irradiates light beams having predetermined spectrum components to the focusing means (10, 403);
an image receiving means (50, 405) which takes an image and generates image data of the focusing means (10, 43) and an indicator (P) with which a player indicates a desired position;
a position detecting means (60, 602) which generates position information of the indicator (P), and
a main control means (70, 603) which performs a game based on the position indicated by the indicator (P), wherein
the focusing means (10, 403) includes a first surface and a second surface which faces the first surface in an opposed manner, and displays the image of the game table which the projecting means (30, 502) projects,
**characterized in that**
the irradiating means (40, 503) irradiates light beams having spectrum components being capable of passing through the focusing means (10, 403) from the first-surface side of the focusing means (10, 403) but being incapable of passing through the indicator (P), and generates a shade (PS) of the indicator (P);
the image receiving means (50, 405) receives the spectrum components from the second-surface side of the focusing means (10, 403), and generates the image data including the shade (PS) of the indicator (P),
the position detecting means (60, 602) receives the image data, detects the position of the shade (PS) of the indicator (P) in the focusing means (10, 403), and generates position information of the indicator (P),
the main control means (70, 603) specifies a region of a bet button corresponding to the indicator (P) based on a positional relationship between the position information of the indicator (P) and an image showing a region of the bet button which is displayed on the focusing means (10, 403), and control the gaming machine based on the specified region of the bet button.

2. The gaming machine according to claim 1, wherein the projecting means (30, 502) also serves as the irradiating means (50, 405) by possessing a function of the irradiating means (50, 405).

## Patentansprüche

1. Spielgerät umfassend:
ein Projizierungsmittel (30, 502), das ein Bild eines Spieltisches projiziert;
ein Fokussierungsmittel (10, 403), das das vom Projizierungsmittel (30, 502) projizierte Bild fokussiert und anzeigt;
ein Strahlungsmittel (40, 503), das Lichtbündel zum Fokussierungsmittel (10, 403) ausstrahlt, die vorbestimmte spektrale Komponenten umfassen;
ein Empfangsmittel (50, 405) eines Bildes, das ein Bild macht und Bilddaten des Fokussierungsmittels (10, 43) und einen Zeiger (P), mit dem ein Spieler eine gewünschte Position zeigt, erzeugt;
ein Ermittelungsmittel (60, 602) einer Position, das eine Positionsinformation des Zeigers (P) erzeugt, und
ein Hauptsteuerungsmittel (70, 603), das ein Spiel basierend auf der vom Zeiger (P) gezeigten Position ausführt, wobei
das Fokussierungsmittel (10, 403) eine erste Fläche und eine zweite Fläche, die der ersten Fläche entgegengesetzt ist, umfasst, und das Bild des Spieltisches, das das Projizierungsmittel (30, 502) projiziert, anzeigt,
**dadurch gekennzeichnet, dass**
das Strahlungsmittel (40, 503) Lichtbündel ausstrahlt, die spektrale Komponenten umfassen, die in der Lage sind, durch das Fokussierungsmittel (10, 403) von der Seite der ersten Fläche des Fokussierungsmittels (10, 403) durchzugehen, aber nicht in der Lage sind, durch den Zeiger (P) durchzugehen, und einen Schatten (PS) des Zeigers (P) erzeugt;
das Empfangsmittel (50, 405) eines Bilds die spektralen Komponenten von der Seite der zweiten Fläche des Fokussierungsmittels (10, 403) empfängt, und die Bilddaten erzeugt, die den Schatten (PS) des Zeigers (P) umfassen,
das Ermittlungsmittel (60, 602) einer Position die Bilddaten empfängt, die Position des Schattens (PS) des Zeigers (P) im Fokussierungsmittel (10, 403) ermittelt, und eine Positionsinformation des Zeigers (P) erzeugt,
das Hauptsteuerungsmittel (70, 603) einen Teil eines Wette-Knopfes spezifiziert, der dem Zeiger (P) entspricht, basierend auf einem Positionsverhältnis zwischen der Positionsinformation des Zeigers (P) und einem Bild, das einen Teil des Wette-Knopfes zeigt, das auf dem Fokussierungsmittel (10, 403) angezeigt ist, und das Spielgerät basierend auf dem spezifizierten Teil des Wette-Knopfes steuert.

2. Spielgerät gemäß Anspruch 1, wobei das Projizierungsmittel (30, 502) auch als das Strahlungsmittel (50, 405) dient, indem es eine Funktion des Strahlungsmittels (50, 405) beinhaltet.

## Revendications

1. Machine de jeu comprenant:
un moyen de projection (30, 502), qui projette une image d'une table de jeu;
un moyen de focalisation (10, 403), qui focalise et affiche l'image projetée par le moyen de projection (30, 502);
un moyen de rayonnement (40, 503), qui rayonne des faisceaux de lumière ayant des composantes de spectre prédéterminées vers le moyen de focalisation (10, 403);
un moyen de réception d'image (50, 405), qui prend une image et génère des données d'image du moyen de focalisation (10, 43) et un indicateur (P), avec lequel un joueur indique une position désirée;
un moyen de détection de position (60, 602), qui génère des informations de position de l'indicateur (P), et
un moyen de commande central (70, 603), qui exécute un jeu sur la base de la position indiquée par l'indicateur (P), dans laquelle
le moyen de focalisation (10, 403) inclut une première surface et une deuxième surface, qui fait face à la première surface d'une manière opposée, et affiche l'image de la table de jeu, que le moyen de projection (30, 402) projette,
**caractérisée en ce que**
le moyen de rayonnement (40, 503) rayonne des faisceaux de lumière ayant des composantes de spectre qui sont capables de passer à travers le moyen de focalisation (10, 403) depuis le côté de la première surface du moyen de focalisation (10, 403) mais qui sont incapables de passer à travers l'indicateur (P), et génère une ombre (PS) de l'indicateur (P);
le moyen de réception d'image (50, 405) reçoit les composantes de spectre depuis le côté de la deuxième surface du moyen de focalisation (10, 403), et génère les données d'image incluant l'ombre (PS) de l'indicateur (P),
le moyen de détection de position (60, 602) reçoit les données d'image, détecte la position de l'ombre (PS) de l'indicateur (P) dans le moyen de focalisation (10, 403), et génère une information de position de l'indicateur (P),
le moyen de commande central (70, 603) spécifie une région d'un bouton de pari correspondant à l'indicateur (P) sur la base d'une relation de position entre l'information de position de l'indicateur (P) et une image montrant une région du bouton de pari, qui est affichée sur le moyen de focalisation (10, 403), et contrôle la machine de jeu sur la base de la région spécifiée du bouton de pari.

2. Machine de jeu selon la revendication 1, dans laquelle le moyen de projection (30, 502) sert aussi en tant que moyen de rayonnement (50, 405) en possédant une fonction du moyen de rayonnement (50, 405).
